# EUROPEAN PATENT APPLICATION

(11) **EP 4 174 693 A1**
(43) Date of publication of application: **03.05.2023**
(21) Application number: 22203778.0
(22) Date of filing: 26.10.2022
(51) Int. Cl.: G06F 21/45, G06F 21/32, G07C 9/32, G07C 9/38, G07C 9/22, G07C 9/27

(54) **SYSTEMS AND METHODS FOR MANAGING ACCESS POINTS AUTHENTICATION REQUIREMENTS**

(30) Priority: 29.10.2021 US 202163263261 P
(71) Applicant: Carrier Corporation, Palm Beach Gardens, FL 33418 (US)
(72) Inventor: SHAIN, Chaim, Palm Beach Gardens, FL 33418 (US); NOVOZHENETS, Yuri, Pittsford, NY 14534 (US)
(74) Representative: Dehns

(57) **Abstract**

Systems and methods for managing access point authentication requirements are disclosed. In some embodiments, a system comprises at least one processor and memory storing instructions executable by the at least one processor. In some embodiments, the instructions when executed cause the system to obtain a partial identification for a user at an access point; obtain user information related to the user; assign an identification score to the user, the identification score based on the obtained partial identification and the user information; and authenticate the user at the access point responsive to the identification score reaching a pre-determined identification score threshold.

## Description

### BACKGROUND

The invention relates generally to authentication requirements and, more specifically, to managing access points authentication requirements.

Generally, some authentication methods that use facial authentication, may require an unobscured face, facial features that remain similar to a reference photo, a high-resolution image, and/or close proximity to a camera (to gather sufficient detail). However, current systems using multi-factor authentication to achieve this, may be inflexible, statically defined (always/never on), additive, or may present some friction.

### BRIEF DESCRIPTION

Aspects of the invention relate to methods, apparatuses, and/or systems for managing access points authentication requirements.

In a first aspect, the invention provides a system for managing access point authentication requirements in an access control system. The system comprises at least one processor and memory storing instructions executable by the at least one processor. In some embodiments, the instructions when executed cause the system to obtain a partial identification for a user at an access point; obtain user information related to the user; assign an identification score to the user, the identification score based on the obtained partial identification and the user information; and authenticate the user at the access point responsive to the identification score reaching a pre-determined identification score threshold.

In some embodiments, the user information is obtained from the access control system.

In some embodiments, the instructions cause the system to dynamically adjust the identification score based on the obtained user information.

In some embodiments, the user information comprises one or more of identification information, behavioral information, or biometric information.

In some embodiments, the instructions cause the system to request additional identification information from the user responsive to the identification score being below the pre-determined identification score threshold.

In some embodiments, the instructions cause the system to adjust the identification score threshold up or down based on the obtained user information.

In a second aspect, the invention provides a method for managing access point authentication requirements, the method being implemented in a computing system comprising at least one processor and memory storing instructions, the method comprises: obtaining a partial identification for a user at an access point; obtaining user information related to the user; assigning an identification score to the user, the identification score based on the obtained partial identification and the user information; and authenticating the user at the access point responsive to the identification score reaching a pre-determined identification score threshold.

In a third aspect, the invention provides a non-transitory computer-readable storage medium storing program instructions, wherein the program instructions are computer-executable to implement: obtaining a partial identification for a user at an access point; obtaining user information related to the user; assigning an identification score to the user, the identification score based on the obtained partial identification and the user information; and authenticating the user at the access point responsive to the identification score reaching a pre-determined identification score threshold.

Various other aspects, features, and advantages of the invention will be apparent through the detailed description of the invention and the drawings attached hereto. It is also to be understood that both the foregoing general description and the following detailed description are examples and not restrictive of the scope of the invention.

### BRIEF DESCRIPTION OF THE DRAWINGS

The subject matter regarded as the invention is particularly pointed out and distinctly claimed in the claims at the conclusion of the specification. The following descriptions of the drawings should not be considered limiting in any way. With reference to the accompanying drawings, like elements are numbered alike:

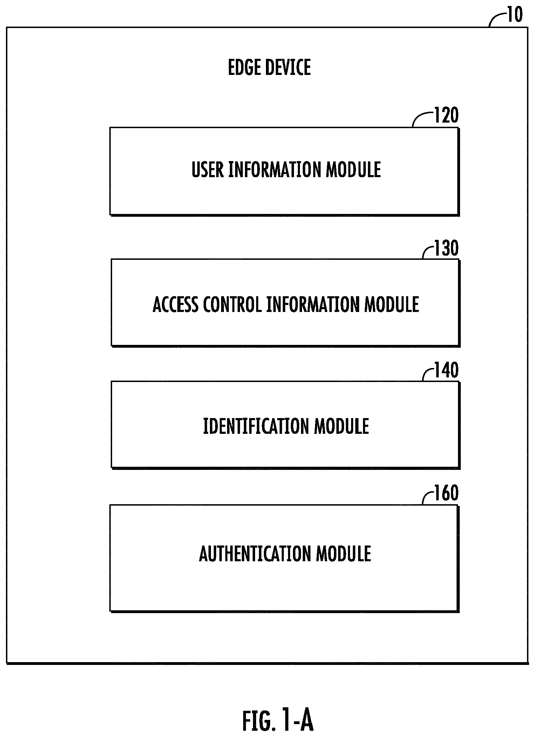

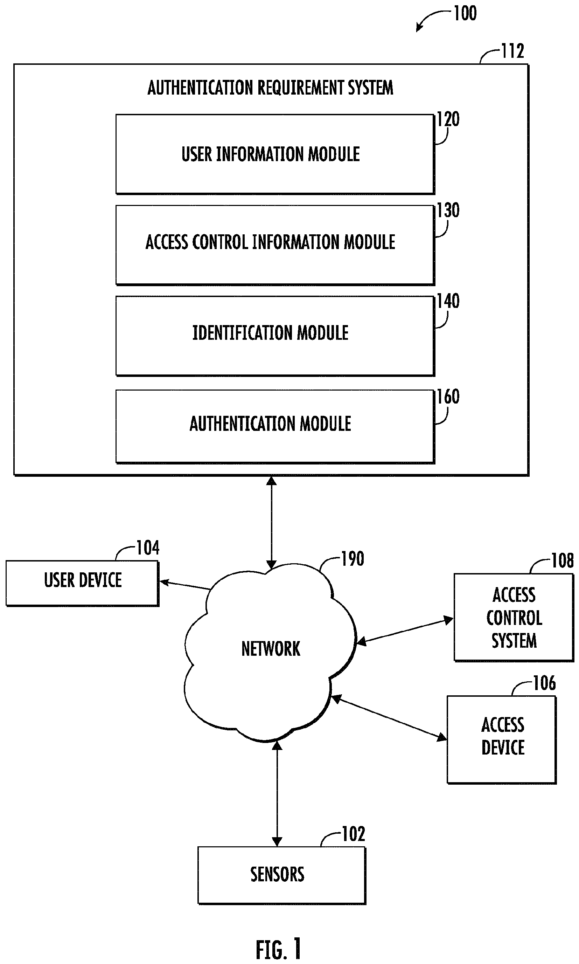

FIG. 1-A shows an example of a system for managing access point authentication requirements, in accordance with one or more embodiments
FIG. 1 shows an example of a system for managing access point authentication requirements, in accordance with one or more embodiments.
FIG. 2 shows a flow diagram illustrating a method for managing access point authentication requirements, in accordance with one or more embodiments.
FIG. 3 shows an example of a computer system that may be used to implement aspects of the techniques described herein.

### DETAILED DESCRIPTION

In the following description, for the purposes of explanation, numerous specific details are set forth in order to provide a thorough understanding of the embodiments of the invention. It will be appreciated, however, by those having skill in the art that the embodiments of the invention may be practiced without these specific details or with an equivalent arrangement. In other cases, well-known structures and devices are shown in block diagram form in order to avoid unnecessarily obscuring the embodiments of the invention.

The present disclosure provides a system for managing access point authentication requirements. The system may offer an overall seamless access control experience to users that, in some cases, may not require the user's active interaction with the access control system. Instead, the present system may be configured to assign an identification score to the user, and/or adjust the authentication requirements, at a given point, based on user information and/or access control information acquired by the system. The access control information and/or user information may include one or more of scheduling information, presence information, biometric information, sensor information, prior authentication information, or other user information. For example, in some cases, access control systems may run into difficulties when trying to authenticate a user (e.g., receiving partial identification information for the user). In these cases, the control system may need additional user identification information to meet the authentication requirements (e.g., to meet an identification score threshold). The system of the present disclosure may allow for using information related to the user (e.g., scheduling information, presence information, biometric information, sensor information, prior authentication information, user devices, or other user information) to identify the user, assign an identification score to the user, and/ or adjust the authentication requirements.

In some embodiments, the user may be assigned an identification score. The present system may authenticate the user responsive the identification score reaching an identification score threshold (i.e. authentication requirement). Similarly, the system may be configured to not authenticate the user if the identification score is below the identification score threshold. In these cases, the system may require additional information from the user. In some embodiments, the system may use user information or access control information to dynamically adjust the identification score. The identification score may be adjusted up or down (e.g., increase or decrease) based on the type of user information or access control information obtained. For example, in some embodiments, the identification score may increase if the information obtained help in identifying the user (e.g., user device detected, user detected in the proximity of the premise, prior authentication at a different access point, user is scheduled to be on the premise, etc.). Conversely, the identification score may decrease if the obtained information conflicts (or does not help) with identifying the user (e.g., user is not scheduled to be on the premise, information indicating that the user is present in another location, etc.).

In some embodiments, the authentication requirements may be adjusted based on the obtained user information or access control information. For example, the authentication requirements may be increased (e.g., in cases of multiple unsuccessful access attempts, user not scheduled to be on the premise, user doesn't have the required access level, etc.). In these cases, the identification score threshold is increased. Similarly, the authentication requirements may decrease (e.g., if the user is already on the premise, prior successful authentication at different access points, etc.).

In some embodiments, access control information may be used to reduce the authentication processing time by reducing the pool of users the system needs to check during the authorization process. This sampling of users based on access control information may allow for a quicker and seamless authentication process compared to authenticating the user against a bigger user group. That said, not all embodiments necessarily provide all of these benefits, and some embodiments may provide other distinct advantages, which is not to suggest that any other feature described herein may not also be omitted in some embodiments.

FIG. 1 shows an example of a system 100 for managing authentication requirements in an access control system, in accordance with one or more embodiments. In some embodiments, system 100 may include an authentication requirement system 112, one or more sensors 102, a user device 104, an access control device 106, an access control system 108, and/or other components. Other components known to one of ordinary skill in the art may be included in system 100 to gather, process, transmit, receive, acquire, and provide information used in conjunction with the disclosed embodiments. In addition, system 100 may further include other components that perform or assist in the performance of one or more processes that are consistent with disclosed embodiments. In some embodiments, one or more embodiments described herein may be performed by an access control device or an access control system. In some embodiments, one or more embodiments described herein may be implemented in an edge device configured for providing control of data flow between networks. FIG.1-A shows an example of an edge device 10 configured for performing one or more embodiments of the present disclosure. The edge device 10 may be configured to perform or assist in the performance of one or more embodiments described herein (e.g., receive, process, store, or transmit information used in conjunction with the disclosed embodiments). The edge device 10 may include other components (e.g., one or more components of system 100, or other components) to assist in the performance of the disclosed embodiments.

As shown in FIG. 1, sensors 102, in some embodiments, may be configured to generate output signals conveying information related to the user, the controlled area, and/or other sensor information. In some embodiments, sensor information may be used to detect, identify, or authenticate the user. In some embodiments, the sensor information provided by sensors 102 may be used for determining one or more user attributes that can be used to determine a user identity, to authenticate the user, or to determine other user related information (e.g., in some embodiments, sensors information may be used to train machine learning models to determine the user's identity or authenticate the user based on the user attributes or other sensor information). In some embodiments, the sensors information may include behavioral information, physiological information, biometric information, identification information; location information, information related to the controlled area (e.g., building), or surrounding environment of the controlled area; and/or other information. In some embodiments, sensors 102 may include one or more of an optical sensor, an accelerometer, a proximity sensor, a location sensor, a global positioning system (GPS) sensor, a position sensor, a pedometer, a motion detector, an RFID reader, a biometric reader, an audio sensor, or other sensors for providing user related or controlled area information. In some embodiments, sensors 102 may be positioned at any location or locations (within or outside system 100) that allow sensor measurements. For example, sensors 102 may include sensors located at or near access device 106, user device 104, with the user (e.g., the user is in possession of the sensor through a device or the sensor is directly coupled with the user), in a surrounding area of the access device 104 or the user (e.g., door, hallway, building, outside a building, etc.), or in other locations.

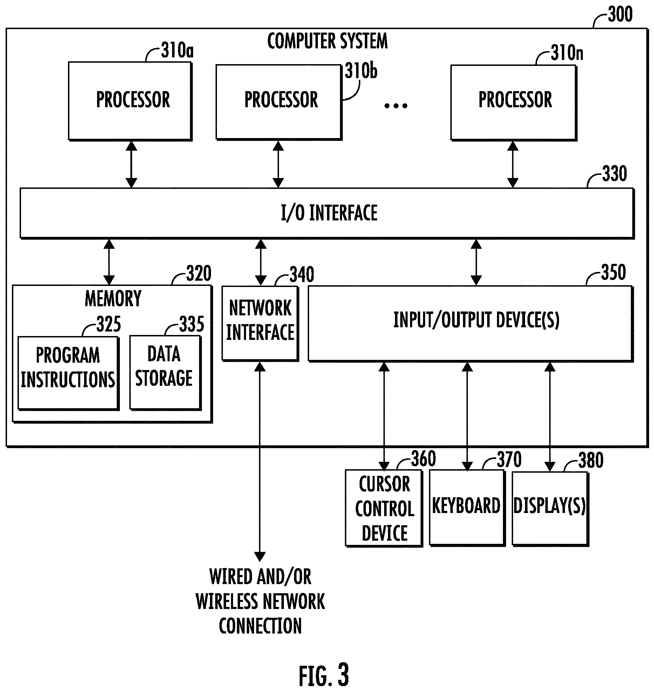

In some embodiments, sensors 102 may include optical sensors configured to generate one or more image data. The image data, in some embodiments, may be used to identify the user. In some embodiments, system 100 may use the image data obtained by the sensors to train the identification models to identify the user. For example, the image data may be used for features or information extraction from data sets received from the optical sensors using a machine learning system (as explained herein below). The optical sensors, in some embodiments, may include one or more of an image or video camera, thermographic sensor, a depth sensor, a scanner, a LIDAR sensor, a RADAR sensor, a 3D camera, an infrared light sensor, a hyperspectral imager, multispectral imager, and/or other sensors. In some embodiments, sensor data obtained from sensors 102 may be processed (e.g., using processors 310 described herein with reference to FIG. 3) to extract image information. In some embodiments, the processors may be included in the sensors. In some embodiments, the sensor data obtained by sensors 102 may include images, videos, multi-dimensional depth images, thermal images, infrared light measurements, light reflection time measurements, radio wave measurements, range, angle, and/or other sensor data. In some embodiments, a plurality of sensor data from a plurality of sensors 102 may be combined to extract the information. For example, images from different locations and angles, multi-dimensional depth images, thermal images, ranges, angles, and/or other image data obtained from sensors 102 may be combined to provide information about the user and/or the controlled area. In some embodiments, computer vision techniques may be used to extract information about the user or the controlled area from the optical sensors. In some embodiments, computer vision may be used for people or object detection, recognition, or identification.

In some embodiments, information generated by sensors 102 may include (or may be used to determine) behavioral characteristics (or attributes) of the user. In some embodiments, behavioral characteristics of the user may be used to detect, identify, or authenticate the user. The behavioral characteristics of the user may include user movement characteristics (e.g., gait, coordination, walking speed, number of steps taken, pace, manner, and pattern of walking, or other movement characteristics). In some embodiments, the behavioral characteristics may include motion, position, or orientation of one or more body parts of the user (e.g., gesture, facial expression, eye movement, head position, etc.). In some embodiments, information generated by sensors 102 may include (or may be used to determine) physiological information (or parameters or attributes). For example, the physiological parameters may include body temperature, heart rate, pulse, breathing parameters (e.g., respiration rate, inhalation/exhalation duration, breathing cycles, or other breathing parameters), or other physiological parameters. In some embodiments, physiological parameters of the user may be used to detect, identify, or authenticate the user.

In some embodiments, information generated by sensors 102 may include (or may be used to determine) biometric information (or attributes) of the user. The biometric information may include physical characteristics (or attributes) of the user (e.g., height, hair, eye, body shape, gender, race, age, body marks, facial, voice characteristics, fingerprints, or other biometric characteristics.) In some embodiments, biometric information of the user may be used to detect, identify, or authenticate the user.

In some embodiments, information generated by sensors 102 may include identification information. The identification information may include, username, ID, access credentials, access levels, passwords, codes, etc. For example, the identification information may be generated in response to the user providing the information to sensors 102 (e.g., by using the sensors to provide identification/authentication credentials). In some embodiments, the sensors may be configured to detect the identification information /authentication credentials automatically (e.g., from image data). In some embodiments, the identification information /authentication credentials may be obtained from user device 104, access control device 106, or access control system 108 described herein.

In some embodiments, information generated by sensors 102 may include information related to the scene (e.g., the controlled area and surrounding environment of the controlled area). Information related to the scene may include size, shape, dimension of the controlled area; number and location of access points; other existing structures or obstacles in the surrounding area; walkways; roads; nature features (trees, etc.); or other physical information related to the controlled area and its surrounding environment. It should be appreciated that examples of sensors types and operations described herein are to be taken as examples of embodiments for illustration purposes only. Other types of sensors and techniques of sensor information extraction are contemplated and consistent within the present disclosure.

Access control device 106, in some embodiments, may be configured to control access to an area or an asset (e.g., a structure, a building, a room, a compartment, a vehicle, a box, a device, a machine, or other areas or assets to which access is controlled). In some embodiments, access control device 106 may include a locking mechanism that is capable of locking, fastening and/or controlling access (e.g., to a controlled asset or controlled area). In some embodiments, access control device 106 may include mechanical or electrical components. In some embodiments, access control device 106 may be configured to receive signals from and transfer signals to one or more components of system 100. In some embodiments, access control device 106 may authenticate the user or the user device 104. In some embodiments, access control device 106 may include an authentication program (or application) configured to authenticate the user (or user device 104) via multi-factor authentication, proximity authentication, passwords, exchange of keys, pairing, registration, biometrics, forming a private link, or other forms of authentication. Although access control device 106 is depicted in FIG. 1 as a single device, in some embodiments, access control device 106 may include a plurality of interconnected devices capable of performing the functions discussed herein. In some embodiments, access control device 106 may be configured to request and/or verify digital certificate information, decrypt/encrypt information, and or other types of information processing operations. In some embodiments, access control device 106 may include computing resources such as processors and memory devices for storing instructions (e.g., computing system 300 described herein below with reference to FIG.3). The processors may be configured to execute software instructions to perform various operations consistent with one or more embodiments of the present disclosure.

In some embodiments, access control device 106 may include one or more of sensors 102 (described herein). For example, in some embodiments, access control device 106 may include one or more of an optical sensor, an RFID reader, a biometric reader, a proximity sensor, motion sensor, and/or other sensors (e.g., sensors 102). In some embodiments, access control device 106 may be configured to provide or all of the processing capabilities to the one or more sensors. In some embodiments, access control device 106 may be configured to communicate sensor data to authentication requirement system 112, access control system 108, or other to other components of system 100.

In some embodiments, access control system 108 may be configured to provide administration functions to control access device 106 (e.g., controlling, programming, monitoring, authenticating, exchanging information, etc.). In some embodiments, access control system 108 may be configured to store access control information related to the user (e.g., access credentials, identification, or authentication information for the user). In some embodiments, the access control information may include information related to access events. For example, the access events information may include details about events when the user accessed or tried to access a controlled area (e.g., time, credentials used, access granted/denied, etc.) In some embodiments, access control system 108 may be configured to communicate the access control information to one or more components of system 100. In some embodiments, access control system 108 may include one or more processors, memory, databases, or other components, known to one of ordinary skill in the art, to gather, process, transmit, receive, acquire, and provide information used in conjunction with the disclosed embodiments.

User device 104 may include any device capable of communicating user authentication credentials to access control device 106. In some embodiments, user device 104 may be configured to communicate with access control device 106 through short-range wireless communication technologies. For example, user device 104 may be any user device having capabilities to communicate with the access control device 106 (e.g., mobile phone, a wearable computing device, a tablet, etc.). In some embodiments, user device 104 may be a keycard (e.g., access card or badge, etc.) configured to communicate user authentication credentials to access control device 106. In some embodiments, the keycard may be a contact card (e.g., magnetic stripe card, barcode, swipe card, or a contact smart card), or a contactless card capable of communication through short-range wireless communications. In some embodiments, user device 104 may be configured to communicate with access control device 106 or other components of system 100 using one or more short range communications technologies (e.g., RFID, NFC, BLE, BTLE, Wi-Fi, Ultra-wideband (UWB), or other short-range communications technologies).

In some embodiments, user device 104 may include one or more of sensors 102 (described herein). For example, user device 104 may include one or more of an accelerometer, a pedometer, a location sensor, GPS, proximity, motion, and/or other sensors. In some embodiments, user device 104 may be configured to provide or all of the processing capabilities to the one or more sensors. In some embodiments, user device 104 may be configured to communicate sensor data to authentication requirement system 112, access control device 106, access control system 108, or other to other components of system 100. For example, responsive to the user device 104 being in proximity of access control device 106 (or in the environment of the access control device), a short-range communication may be established between the user device and one or more components of system 100 to allow for communicating sensor data, or other communication (e.g., authentication).

Authentication requirement system 112, in some embodiments, may include a user information module 120, an access control information module 130, an identification module 140, an authentication module 160, and/or other components. In some embodiments, authentication requirement system 112 may include computing resources such as processors and memory devices for storing instructions (e.g., computing system 300 described herein below with reference to FIG. 3). The processors may be configured to execute software instructions to perform various operations of system 100. The computing resources may include software instructions to perform operations of modules 120, 130, 140,160, and/or other components of systems 112 and 100.

User information module 120 may be configured to obtain (or determine) information related to the user. The user information may include behavioral information, physiological information, biometric information, location information, identification information, authentication information, or other user related information. In some embodiments, the user information may be determined from output signals generated by sensors 102. In some embodiments, the user information may be obtained from user device 104, access device 106, access control system 108, or other components within or outside system 100 (e.g., a database).

For example, user information module 120 may be configured to obtain or determine identification information. The identification information may include, username, ID, access credentials, access levels, passwords, codes, user schedule, etc. In some embodiments, the identification information of the user includes credentials issued to the user during an initial enrollment process. For example, the identification information may be used in the authentication process of the user (e.g., a badge, a pin, a username + password, etc.) In some embodiments, information module 120 may obtain (or determine) the identification information from one or more of the user, sensors 102, user device 104, access device 106, access control system 108, or other components of system 100.

In some embodiments, user information module 120 may be configured to determine behavioral attributes (or characteristics) of the user based on output signals from sensors 102. The behavioral characteristics of the user may include user movement characteristics (e.g., gait, coordination, walking speed, number of steps taken, pace, manner, and pattern of walking, or other movement characteristics); motion, position, or orientation of one or more body parts of the user (e.g., gesture, facial expression, eye movement, head position, etc.); or other behavioral characteristics. In some embodiments, user information module 120 may be configured to extract the users' behavioral characteristics from image data. For example, gait of the user may be determined using image/video analysis techniques. In some embodiments, behavioral characteristics of the user may be determined based on combination of information from multiple sensors 102 (e.g., optical sensor, location sensor, accelerometer, pedometer, etc.). In some embodiments, the determined behavioral attributes may be mapped to authentication information for the user, or access information related to the user to identify the user or to train identification models to identify the user based on the determined attributes (as explained herein).

In some embodiments, user information module 120 may be configured to determine biometric attributes of the user based on output signals from sensors 102. The biometric attributes of the user may include physical characteristics (or attributes) of the user (e.g., height, hair, eye, body shape, gender, race, age, body marks, facial, voice characteristics, fingerprints, or other biometric characteristics.). In some embodiments, user information module 120 may be configured to extract the users' biometric attributes from image data. For example, one or more or more physical characteristics of the user may be determined using image/video analysis techniques. In some embodiments, biometric attributes of the user may be determined based on combination of information from multiple sensors 102 (e.g., optical sensor, location sensor, accelerometer, pedometer, etc.). In some embodiments, the determined biometric attributes may be mapped to identification information for the user, or access information related to the user to identify the user or train identification models to identify the user based on the determined biometric attributes.

In some embodiments, user information module 120 may be configured to determine one or more physiological attributes (or parameters) of the user based on output signals from sensors 102. In some embodiments, the physiological parameters may include body temperature, heart rate, pulse, oximetry, breathing parameters (e.g., respiration rate, inhalation/exhalation duration, breathing cycles, or other breathing parameters), or other physiological parameters. In some embodiments, sensors 102 may comprise one or more sensors that measure such parameters directly (e.g., through fluid communication with the user), or sensors that generate output signals related to the one or more physiological parameters indirectly through measurements from other sensors or other components within or outside system 100 (e.g., motion sensors, accelerometers, optical sensors, audio sensors, and/or other sensors.) In some embodiments, the physiological parameters related to the user may be used to identify the user or to train identification models to identify the user based on the determined physiological attributes.

In some embodiments, access control information module 130 may be configured to obtain access information related to the user. In some embodiments, the access information may be obtained from access device 106, access control system 108, sensors 102, or from other components within or outside of system 100. In some embodiments, the access control information may include information related to access events. For example, the access events information may include details about events when the user accessed or tried to access a controlled area (e.g., time, credentials used, access granted/denied, etc.) In some embodiments, module 130 may be configured to determine whether the user accessed (entered) the controlled area based on the received access information. In some embodiments, access control information module 130 may be configured to determine when the user "actually" entered the controlled area based on access events from multiple access points. For example, a user may be determined to have entered the building if the access events for the user include events from the access control device 106 (e.g., at the front of the building) or from another access control device located inside the building (e.g., elevator, floor, garage, office, coffee machine, printer, or other controlled areas or assets inside the building). In some embodiments, in addition to the access information, module 130 may determine that the user entered the controlled area based on information or events that identify the user inside the building (e.g., data from one or more sensors inside the building that identify the user). Similarly, the access control information module 130 may be configured to determine when the user did not access the controlled area. For example, the access control information module 130 may determine that the user was denied access (e.g., because he doesn't have access or for authentication issues). In some embodiments, the access control information module 130 may determine that the user did not access the controlled area even after successful authentication (e.g., the user is just passing by the access point and does not intend to enter).

Identification module 140 may be configured to assign an identification score to the user. In some embodiments, the identification score may be based on user information obtained from user information module 120, access control information obtained from the access control information module 130, user information obtained from user information module 120, sensors information obtained from sensors 102, or based on other information obtained from other components of system 100. In some embodiments, the identification score may be dynamically adjusted up or down based on the type of information received. For example, in some embodiments, the identification score may increase if the information obtained help in identifying the user (e.g., user device detected, user detected in the proximity of the premise, prior authentication at a different access point, user is scheduled to be on the premise, etc.). In other words, the user identification score may increase responsive to the system confidence, that the user is who he claims he is, increases.

For example, a given access point has an authentication requirement of 90 points. The authentication requirement here refers to an identification score threshold, the user needs, to be authenticated at the access point. The authentication requirements, in some embodiments, may be set by administrators based on security requirements for the access point (e.g., threat level). Responsive to receiving partial identification at the access point (or no identification at all), identification module 140 may assign a low initial score to the user (e.g., 20 points for an obscured face, or 0 points for no identification, etc.). In this case, identification module 140 may be configured to use information obtained from user information module 120, access control system 130, sensors 102, or other information in the identification process. The initial identification score may be dynamically adjusted (increased or decreased) with each additional information. For example, the user information obtained by identification module 140 may include the user schedule. The initial identification score may be increased if the user is scheduled to be on the premise at the time. The user score may further increase in response to receiving sensor information identifying the user (gait, biometrics, physiological characteristics, etc.); detecting the user's user device 104 (proximity to the access point, WiFi connection, etc.). Similarly, the user score may increase responsive to receiving access control information indicating a previous successful authentication at previous access point (e.g., main door). Each type of information obtained by identification module 140 may be given a different weight (or points by which to increase the initial score) on the initial score. The user may be authenticated at the access point responsive to the adjusted user identification score reaching the threshold (in this case 90 points).

Similarly, the identification score may decrease if the obtained information conflicts (or does not help) with identifying the user. For example, the initial identification score may be decreased if the user is not scheduled to be on the premise at the time of the attempted access. In this case, the schedule information may be given a negative weight (e.g., negative points). For example, the initial score may decrease by 10 points. Similarly, the user score may decrease in response to receiving sensor information detecting the user or the user's device is at a different location. Similarly, the user score may decrease responsive to receiving access control information indicating an access event at different access point (e.g., user left the premises, or previous unsuccessful authentication at a previous access point (e.g., main door, etc.). Each type of information obtained by identification module 140 may be given a different weight (or points by which to decrease the initial score) on the initial score. The system may be configured to not authenticate the user if the identification score is below the identification score threshold. In these cases, the system may require additional information from the user.

It's to be noted that the examples given herein are for illustration purposes only and are not intended to be limiting. For example, the identification scoring, the dynamic adjusting of the score may be achieved using different methods. For example, an initial score may be assign to authentication credentials (e.g., ID, password, badge, pin, etc.) and the score may be adjusted using a scoring table (or matrix) that weighs the score using each obtained additional user information (identifying information, user information, access control information, sensor information, etc.). In some embodiments, the identification score is made up of multiple scores (positive or negative score for each identifying user information). The scoring and the weighing values may be set by the administrator or may be dynamically determined by the system based on the authentication requirements (e.g., security or threat level), the type of access point, the type and amount of user information obtained. For example, a prior authentication at a main entrance may be given a higher score than an authentication at a garage or an elevator. Similarly, authentication at an access point may be given a higher score than an identification (e.g., by a camera), or identification may be given higher score than schedule information.

It's to be appreciated that the above examples are for illustration purposes only and are not intended to be limiting. The order of operations may be different and be consistent with the present disclosure. For example, the identification module 140 may be configured to "gather" identifying information before the user attempts accessing an access point. In other words, the identification module 140 may already have information (e.g., obtained from user information module 120, access control information 140, sensors 102, etc.) when the user tries the access point. In these cases, the user already has an identification score (from the identifying information discussed above) when he's at the access point. In some embodiments, the identification score may be enough (reaches the score threshold) and allows for a seamless access for the user. In some embodiments, the system may use other identifying information to bring the user score to the threshold and be authenticated (even if the other identification is partial, e.g., obscured face, as long as the score threshold is reached). In some embodiments, if the score threshold is not reached, the user may be requested to provide other identification to bring his score to the threshold and be authenticated.

Authentication module 160 may be configured to authenticate the user. In some embodiments, authentication module 160 may authenticate the user responsive to the user identification score reaching the predetermined identification threshold. In some embodiments, authentication module 160 may be configured to adjust the authentication requirements (e.g., the identification score threshold) for one or more access points. In some embodiments, authentication module 160 may adjust the authentication requirements for a given access point based on one or more of access control information obtained from the access control information module 130, user information obtained from user information module 120, sensors information obtained from sensors 102, or based on other information obtained from other components of system 100. For example, in some embodiments, authentication module 160 may increase the authentication requirements responsive to access control information indicating that the user was unsuccessfully authenticated at a different access point, or after multiple failed attempts, or multiple wrong credentials, etc. Similarly, in some embodiments, authentication module160 may increase the authentication requirements responsive to the user schedule indicating he is not scheduled to be on the premises, or the user was not detected by other sensors, or the user was detected in another location, etc.

In some embodiments, authentication module 160 may reduce the authentication requirements based on one or more of access control information obtained from the access control information module 130, user information obtained from user information module 120, sensors information obtained from sensors 102, or based on other information obtained from other components of system 100. For example, in some embodiments, access control information may indicate whether the user was successfully authenticated at a first access point and whether the user accessed (actually entered) the first access point. In some embodiments, the information about the access events of the first access point may be used in authenticating the user at subsequent access points. For example, responsive to not reaching the identification threshold score for an access point (e.g., elevator), the authentication module 160 may use a prior authentication of the user at a different access point (e.g., main entrance) to lower the requirements for the elevator (so the user may be granted access with less identification threshold score). In some embodiments, adjusting the authentication requirements, may include decreasing or increasing the authentication requirements.

In some embodiments, authentication module 160 may be configured to use access control information received from the access control system to reduce the authentication time at a given access point. For example, access control information (e.g., identity of users who accessed different access points in the building, their locations, identities, access levels, or other feedback information received from the access control system) may be used to reduce the authentication processing time by reducing the pool of users the access control system needs to check during the authorization process. For example, if the user is already in the building, the access control system needs only to check the user against the users who already accessed the main entrance. Similarly, if the user is attempting to access an office, the access control system may first look in the group of users who are already in the building and who have the access level to enter the office. This sampling of users based on access control information may allow for a quicker and seamless authentication process compared to authenticating the user against a bigger user group.

In some embodiments, system 100 may be configured to build a confidence profile for the user. In some embodiments, the confidence profile may be built based on (or include) one or more identification information for the user. In some embodiments, identification module 140 may assign the user identification score to the confidence profile. In some embodiments, the user confidence profile may be dynamically updated based on newly obtained identifying information. In some embodiments, the confidence profile may be dynamically built with a first identifying information for the user. For example, the system may start building the confidence profile once the user is first detected (e.g., in the proximity of the premises, garage, etc.). In some embodiments, after receiving the first detection/identification, system 100 may start building the profile using other user information (e.g., other sensor information, user schedule, access levels, etc.). In some embodiments, system 100, may add authentication events at different access points to the confidence profile. In some embodiments, the confidence profile may be temporary. For example, system 100 may be configured to re-set the confidence profile based on the type of user, access level, after a pre-determined amount of time, at select locations, at select access points, select times, or at any other events. For example, the profile is re-set each time the user leaves the building. As explained above, the user may already have an identification score assigned to his confidence profile when he presents himself to an access point. Based on the confidence profile (and the identification score), the user may move seamlessly through access points, or may be required to provide other identifying information.

In some embodiments, one or more components of system 100 may communicate directly through one or more dedicated communication links. In some embodiments system 100 may include a network 190 connecting one or more components of system 100. In some embodiments, network 190 may be any type of network configured to provide communications between components of system 100. For example, network may be any type of wired or wireless network (including infrastructure) that provides communications, exchanges information, and/or facilitates the exchange of information, such as the Internet, near field communication (NFC), optical code scanner, cellular network, a public switched telephone network ("PSTN"), text messaging systems (e.g., SMS, MMS), frequency (RF) link, Bluetooth^{®}, Wi-Fi, a private data network, a virtual private network, a Wi-Fi network, a LAN or WAN network, or other suitable connections that enables the sending and receiving of information between the components of system 100. It will be appreciated that this is not intended to be limiting and that the scope of this disclosure includes implementations in which the client one or more components of system 100 are operatively linked via some other communication media.

It should be appreciated that the illustrated components are depicted as discrete functional blocks, but embodiments are not limited to systems in which the functionality described herein is organized as illustrated. The functionality provided by each of the components may be provided by software or hardware modules that are differently organized than is presently depicted, for example such software or hardware may be intermingled, conjoined, replicated, broken up, distributed (e.g., within a data center or geographically), or otherwise differently organized. The functionality described herein may be provided by one or more processors of one or more computers executing code stored on a tangible, non-transitory, machine readable medium.

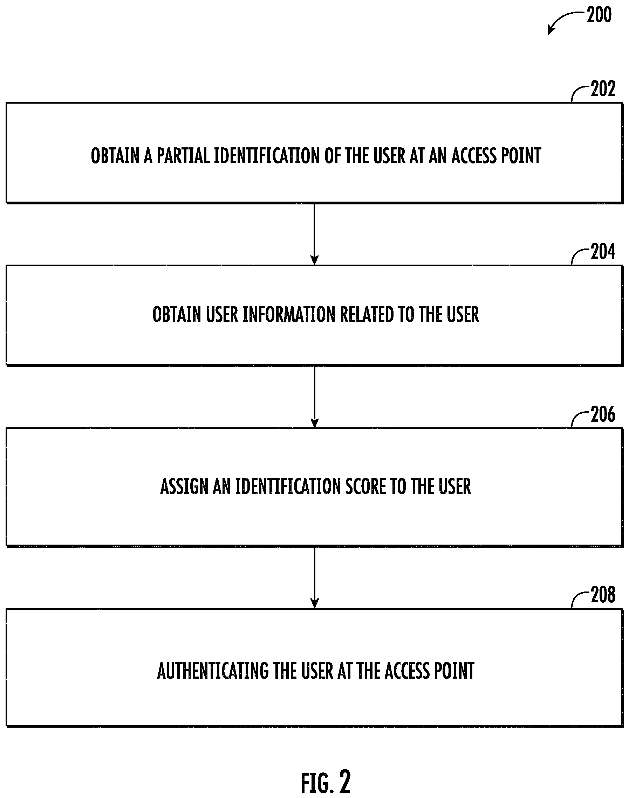

FIG.2 Illustrates a method 200 for managing access point authentication requirements, in accordance with one or more embodiments of the present disclosure. The operations of method 200 presented below are intended to be illustrative. In some implementations, method 200 may be accomplished with one or more additional operations not described and/or without one or more of the operations discussed. Additionally, the order in which the operations of method 200 are illustrated in FIG. 2 and described below is not intended to be limiting.

In some embodiments, the methods may be implemented in one or more processing devices (e.g., a digital processor, an analog processor, a digital circuit designed to process information, an analog circuit designed to process information, a state machine, and/or other mechanisms for electronically processing information). The processing devices may include one or more devices executing some or all of the operations of the methods in response to instructions stored electronically on an electronic storage medium. The processing devices may include one or more devices configured through hardware, firmware, and/or software to be specifically designed for execution of one or more of the operations of the method.

At an operation 202 of method 200, partial identification for a user at an access point may be obtained. In some embodiments, operation 202 may be performed by an identification module, the same as or similar to access control identification module 140 (shown in FIG. 1 and described herein).

At an operation 204 of method 200, user information related to the user may be obtained. In some embodiments, the user information may include identification information. In some embodiments, operation 204 may be performed by user information module, the same as or similar to user information module 120 (shown in FIG. 1 and described herein).

At an operation 206 of method 200, an identification score may be assigned to the user. In some embodiments, the identification score may be based on the obtained partial identification and the user information. In some embodiments, operation 206 may be performed by an identification module, the same as or similar to access control identification module 140 (shown in FIG.1 and described herein).

At operation 208 of method 200, the user may be authenticated at the access point. In some embodiments, the user may be authenticated responsive to the identification score reaching a pre-determined identification score threshold. In some embodiments, operation 208 may be performed by an authentication module, the same as or similar to authentication module 160 (shown in FIG.1 and described herein).

Embodiments of one or more techniques of the present disclosure as described herein may be executed on one or more computer systems, which may interact with various other devices. One such computer system is illustrated by FIG. 3. FIG. 3 shows an example of a computer system that may be used to implement aspects of the techniques described herein. In different embodiments, computer system 300 may include any combination of hardware or software that can perform the indicated functions, including, but not limited to, a computer, personal computer system, desktop computer, laptop, notebook, or netbook computer, mainframe computer system, handheld computer, workstation, network computer, a camera, a set top box, a mobile device, network device, internet appliance, PDA, wireless phones, pagers, a consumer device, video game console, handheld video game device, application server, storage device, a peripheral device such as a switch, modem, router, or other type of computing or electronic device.

In the illustrated embodiment, computer system 300 includes one or more processors 310 coupled to a system memory 320 via an input/output (I/O) interface 330. Computer system 300 further includes a network interface 340 coupled to I/O interface 330, and one or more input/output devices 350, such as cursor control device 360, keyboard 370, and display(s) 380. In some embodiments, it is contemplated that embodiments may be implemented using a single instance of computer system 300, while in other embodiments multiple such systems, or multiple nodes making up computer system 300, may be configured to host different portions or instances of embodiments. For example, in one embodiment some elements may be implemented via one or more nodes of computer system 300 that are distinct from those nodes implementing other elements.

In various embodiments, computer system 300 may be a uniprocessor system including one processor 310, or a multiprocessor system including several processors 310 (e.g., two, four, eight, or another suitable number). Processors 310 may be any suitable processor capable of executing instructions. May be comprised of semiconductor(s) and/or transistors (e.g., electronic integrated circuits (Ics)). In such a context, processor-executable instructions may be electronically executable instructions. For example, in various embodiments, processors 310 may be general-purpose or embedded processors implementing any of a variety of instruction set architectures (ISAs), such as the x86, PowerPC, SPARC, or MIPS ISAs, or any other suitable ISA. In multiprocessor systems, each of processors 310 may commonly, but not necessarily, implement the same ISA.

In some embodiments, at least one processor 310 may be a graphics processing unit. A graphics processing unit or GPU may be considered a dedicated graphics-rendering device for a personal computer, workstation, game console or other computing or electronic device. Modern GPUs may be very efficient at manipulating and displaying computer graphics, and their highly parallel structure may make them more effective than typical CPUs for a range of complex graphical algorithms. For example, a graphics processor may implement a number of graphics primitive operations in a way that makes executing them much faster than drawing directly to the screen with a host central processing unit (CPU). In various embodiments, the image processing methods disclosed herein may, at least in part, be implemented by program instructions configured for execution on one of, or parallel execution on two or more of, such GPUs. The GPU(s) may implement one or more application programmer interfaces (APIs) that permit programmers to invoke the functionality of the GPU(s). Suitable GPUs may be commercially available from vendors such as NVIDIA Corporation, ATI Technologies (AMD), and others. In some embodiments, one or more computers may include multiple processors operating in parallel. A processor may be a central processing unit (CPU) or a special-purpose computing device, such as graphical processing unit (GPU), an integrated circuit or on-chip system, an application-specific integrated circuit (ASIC), a field-programmable gate array (FPGA), a complex programmable logic device (CPLD), or application-specific integrated circuits.

System memory 320 may be configured to store program instructions and/or data accessible by processor 310. In various embodiments, system memory 320 may be implemented using any suitable memory technology, such as static random-access memory (SRAM), synchronous dynamic RAM (SDRAM), nonvolatile/Flash-type memory, or any other type of memory. In the illustrated embodiment, program instructions and data implementing desired functions, such as those described in this disclosure, are shown stored within system memory 320 as program instructions 325 and data storage 335, respectively. In other embodiments, program instructions and/or data may be received, sent, or stored upon different types of computer-accessible media or on similar media separate from system memory 320 or computer system 300. Generally speaking, a computer-accessible medium may include storage media or memory media such as magnetic or optical media, e.g., disk or CD/DVD-ROM coupled to computer system 300 via I/O interface 330. Program instructions and data stored via a computer-accessible medium may be transmitted by transmission media or signals such as electrical, electromagnetic, or digital signals, which may be conveyed via a communication medium such as a network and/or a wireless link, such as may be implemented via network interface 340.

In one embodiment, I/O interface 330 may be configured to coordinate I/O traffic between processor 310, system memory 320, and any peripheral devices in the device, including network interface 340 or other peripheral interfaces, such as input/output devices 350. In some embodiments, I/O interface 330 may perform any necessary protocol, timing, or other data transformations to convert data signals from one component (e.g., system memory 320) into a format suitable for use by another component (e.g., processor 310). In some embodiments, I/O interface 330 may include support for devices attached through various types of peripheral buses, such as a variant of the Peripheral Component Interconnect (PCI) bus standard or the Universal Serial Bus (USB) standard, for example. In some embodiments, the function of I/O interface 330 may be split into two or more separate components, such as a north bridge and a south bridge, for example. In addition, in some embodiments some or all of the functionality of I/O interface 330, such as an interface to system memory 320, may be incorporated directly into processor 310.

Network interface 340 may be configured to allow data to be exchanged between computer system 300 and other devices attached to a network, such as other computer systems, or between nodes of computer system 300. In various embodiments, network interface 340 may support communication via wired or wireless general data networks, such as any suitable type of Ethernet network, for example, via telecommunications/telephony networks such as analog voice networks or digital fiber communications networks; via storage area networks such as Fibre Channel SANs, or via any other suitable type of network and/or protocol.

Input/output devices 350 may, in some embodiments, include one or more display terminals, cursor control devices (e.g., mouse), keyboards, keypads, touchpads, touchscreens, scanning devices, voice or optical recognition devices, or any other devices suitable for entering or retrieving data by one or more computer system 300. Multiple input/output devices 350 may be present in computer system 300 or may be distributed on various nodes of computer system 300. In some embodiments, similar input/output devices may be separate from computer system 300 and may interact with one or more nodes of computer system 300 through a wired or wireless connection, such as over network interface 340.

Those skilled in the art will appreciate that computer system 300 is merely illustrative and is not intended to limit the scope of the present disclosure. In particular, computer system 300 may also be connected to other devices that are not illustrated, or instead may operate as a stand-alone system. In addition, the functionality provided by the illustrated components may in some embodiments be combined in fewer components or distributed in additional components. Similarly, in some embodiments, the functionality of some of the illustrated components may not be provided and/or other additional functionality may be available.

It should be understood that the description and the drawings are not intended to limit the invention to the particular form disclosed, but to the contrary, the intention is to cover all modifications, equivalents, and alternatives falling within the spirit and scope of the present invention as defined by the appended claims. Further modifications and alternative embodiments of various aspects of the invention will be apparent to those skilled in the art in view of this description. Accordingly, this description and the drawings are to be construed as illustrative only and are for the purpose of teaching those skilled in the art the general manner of carrying out the invention. It is to be understood that the forms of the invention shown and described herein are to be taken as examples of embodiments. Elements and materials may be substituted for those illustrated and described herein, parts and processes may be reversed or omitted, and certain features of the invention may be utilized independently, all as would be apparent to one skilled in the art after having the benefit of this description of the invention. Changes may be made in the elements described herein without departing from the scope of the invention as described in the following claims. Headings used herein are for organizational purposes only and are not meant to be used to limit the scope of the description.

As used throughout this application, the word "may" is used in a permissive sense (i.e., meaning having the potential to), rather than the mandatory sense (i.e., meaning must). The words "include", "including", and "includes" and the like mean including, but not limited to. As used throughout this application, the singular forms "a," "an," and "the" include plural referents unless the content explicitly indicates otherwise. Thus, for example, reference to "an element" or "a element" includes a combination of two or more elements, notwithstanding use of other terms and phrases for one or more elements, such as "one or more." The term "or" is, unless indicated otherwise, non-exclusive, i.e., encompassing both "and" and "or." Terms describing conditional relationships, e.g., "in response to X, Y," "upon X, Y,", "if X, Y," "when X, Y," and the like, encompass causal relationships in which the antecedent is a necessary causal condition, the antecedent is a sufficient causal condition, or the antecedent is a contributory causal condition of the consequent, e.g., "state X occurs upon condition Y obtaining" is generic to "X occurs solely upon Y" and "X occurs upon Y and Z." Such conditional relationships are not limited to consequences that instantly follow the antecedent obtaining, as some consequences may be delayed, and in conditional statements, antecedents are connected to their consequents, e.g., the antecedent is relevant to the likelihood of the consequent occurring. Further, unless otherwise indicated, statements that one value or action is "based on" another condition or value encompass both instances in which the condition or value is the sole factor and instances in which the condition or value is one factor among a plurality of factors. Unless otherwise indicated, statements that "each" instance of some collection have some property should not be read to exclude cases where some otherwise identical or similar members of a larger collection do not have the property, i.e., each does not necessarily mean each and every. Unless specifically stated otherwise, as apparent from the discussion, it is appreciated that throughout this specification discussions utilizing terms such as "processing," "computing," "calculating," "determining" or the like refer to actions or processes of a specific apparatus, such as a special purpose computer or a similar special purpose electronic processing/computing device.

While the present invention has been described with reference to an exemplary embodiment or embodiments, it will be understood by those skilled in the art that various changes may be made and equivalents may be substituted for elements thereof without departing from the scope of the present invention. In addition, many modifications may be made to adapt a particular situation or material to the teachings of the present disclosure without departing from the scoe of the present invention. Therefore, it is intended that the present invention not be limited to the particular embodiment disclosed, but that the present invention will include all embodiments falling within the scope of the claims.

## Claims

1. A system for managing access point authentication requirements for an access control system, the system comprising:
at least one processor; and
memory storing instructions executable by the at least one processor, wherein the instructions when executed cause the system to:
obtain a partial identification for a user at an access point;
obtain user information related to the user;
assign an identification score to the user, the identification score being based on the obtained partial identification and the user information; and
authenticate the user at the access point responsive to the identification score reaching a pre-determined identification score threshold.

2. The system of claim 1, wherein the user information is obtained from the access control system.

3. The system of claim 1 or 2, wherein the instructions when executed cause the system to:
dynamically adjust the identification score based on the user information.

4. The system of claim 1, 2 or 3, wherein the user information comprises one or more of identification information, biometric information, or behavioral information.

5. The system of any preceding claim, wherein the instructions when executed cause the system to:
request additional identification information from the user responsive to the identification score being below the pre-determined identification score threshold.

6. The system of any preceding claim, wherein the instructions when executed cause the system to:
adjust the identification score threshold up or down based on the obtained user information.

7. A method for managing access point authentication requirements of an access control system, the method being implemented in a computing system comprising at least one processor and memory storing instructions, the method comprising:
obtaining a partial identification for a user at an access point;
obtaining user information related to the user;
assigning an identification score to the user, the identification score based on the obtained partial identification and the user information; and
authenticating the user at the access point responsive to the identification score reaching a pre-determined identification score threshold.

8. The method of claim 7, wherein the user information is obtained from the access control system.

9. The method of claim 7 or 8, comprising:
dynamically adjusting the identification score based on the user information.

10. The method of claim 7, 8 or 9, wherein the user information comprises one or more of identification information, biometric information, or behavioral information.

11. The method of any one of claims 7 to 10, comprising:
requesting additional identification information from the user responsive to the identification score being below the pre-determined identification score threshold.

12. The method of any one of claims 7 to 11, comprising:
adjusting the identification score threshold up or down based on the obtained user information.

13. A non-transitory computer-readable storage medium storing program instructions, wherein the program instructions are computer-executable to implement:
obtaining a partial identification for a user at an access point;
obtaining user information related to the user;
assigning an identification score to the user, the identification score based on the obtained partial identification and the user information; and
authenticating the user at the access point responsive to the identification score reaching a pre-determined identification score threshold.
